# EUROPÄISCHE PATENTANMELDUNG

(11) **EP 1 044 938 A1**
(43) Veröffentlichungstag der Anmeldung: **18.10.2000**
(21) Anmeldenummer: 99810318.8
(22) Anmeldetag: 16.04.1999
(51) Int. Cl.: C04B 14/24

(54) **Fliessfähige und aushärtbare Gussmasse, insbesondere Leichtbeton, Element oder Bauteil, sowie ein Verfahren zur Herstellung von strukturierten Oberflächen an solchen**

(71) Anmelder: Misapor AG, 7302 Landquart (CH)
(72) Erfinder: Basura, Danko, 7000 Chur (CH); Engi, Daniel, 7203 Trimmis (CH)
(74) Vertreter: Riederer, Conrad A., Dr.

(57) **Zusammenfassung**

Durch die Verwendung von gebrochenem Schaumglas als Zuschlagstoff für eine mit einem Bindemittel gebundene Gussmasse wurde ein Baustoff erreicht, welcher sehr breit gefächerte Anwendungen ermöglicht.

## Beschreibung

Die Erfindung betrifft eine fliessfähige und aushärtbare Gussmasse, insbesondere Leichtbeton, mit einem Bindemittel, insbesondere Zement, und wenigstens einem Leichtzuschlagstoff, ein vorfabriziertes Element, ein vor Ort gegossenes Bauteil, sowie ein Verfahren zur Herstellung von strukturierten Oberflächen in gegossenen Bauteilen und Elementen.

Schaumglas wird in Plattenform oder als Schüttgut auf dem Markt angeboten. Zur Herstellung von Schaumglasplatten wird Neuglas mit unterschiedlichen Zusätzen versetzt in Formen gebacken und dadurch geschäumt, danach ausgekühlt und in Platten geschnitten. Die Schaumglasbrocken des Schüttgutes sind Bruchstücke einer Schaumglasschicht, welche durch Backen bei bis zu etwa 900 Grad eines mit mineralischen Zusätzen versetzten Altglaspuders hergestellt wird. Die Herkunft des Glases spielt eine untergeordnete Rolle. Es kann auch Neuglas zur Herstellung des Schaumglasschotters verwendet werden. Das Herstellungsverfahren dieses Schaumglasschotters ist durch das europäische Patent Nr. 0292424 geschützt.

Schaumglas ist bekannt als inerter Dämmstoff mit relativ hoher Druckfestigkeit. Der Schaumglasschotter wird unter anderem eingesetzt für Perimeterisolierungen, Sauberkeitsschichten unter Bauwerken, als leichtgewichtiges Schotter für Druckausgleichsschichten im Strassenbau. Dabei wird in erster Linie das niedrige Raumgewicht und die Dämmfähigkeit des Schaumglases, aber auch seine gute und stabile Verdichtbarkeit genutzt. Weiter wird insbesondere die Wasserdurchlässigkeit auch des verdichteten Schottergefüges geschätzt. Die Wasserdurchlässigkeit basiert auf den grossen Hohlraumquerschnitten zwischen den Schaumglasbrocken praktisch einheitlicher Grösse. Dank der Abwesenheit von Feinanteilen kann die Wasserdurchlässigkeit ohne Ausschwemmgefahr dauerhaft genutzt werden. Da sich die einzelnen Schaumglasbrocken im Gefüge mit den scharfen Kanten in den unzähligen aufgebrochenen Gasporen der Schaumglasbrockenoberfläche ineinander verkrallen, weist Schaumglasschotter den sehr steilen Schüttwinkel von etwa 45° auf. Es ist daher auch im Bereich Hangsicherung einsetzbar.

Gemäss "Enzyklopädie Naturwissenschaft und Technik", Verlag Moderne Industrie, München 1980, weist ein normaler Beton (normaler Schwerbeton) eine Rohdichte von 2,2 bis 2,5 t/m³, eine Druckfestigkeit von 16 bis 60 MPa (= N/mm²) und einen Wärmeleitwert von 1,97 W/mK auf. Um ein niedrigeres Gewicht und eine tiefere Wärmeleitzahl zu erhalten, kann ein Teil der Zuschlagstoffe Sand, Kies oder Splitt durch verschiedene leichtere Zuschlagstoffe mit Gaseinschlüssen, z.B. Bimsstein oder Blähton, ersetzt oder ein zähflüssiger Feinstmörtel mit Gasblasen durchsetzt werden. Dadurch erhält man Leichtbeton. Gemäss erwähnter Enzyklopädie kann Leichtbeton in vier Gruppen unterteilt werden:
1. Gruppe: Dichter Leichtzuschlagbeton, welcher konstruktiv für Hochhaus- und Industriebauten, sowie Brücken verwendet werden kann. Kennwerte: Rohdichte 1,4 bis 1,9 t/m³; Druckfestigkeit 16 bis 45 MPa (= N/mm²) und Wärmeleitwert 0,58 bis 1,38 W/mK. Für diesen Beton werden die normalen Betonzuschlagstoffe verwendet, jedoch teilweise durch Leichtzuschlagstoffe ersetzt. Als besondere Zuschlagstoffe sind Blähton und Blähschiefer angegeben. Die Gefügeart ist geschlossen.
2. Gruppe: Haufwerksporiger Leichtzuschlagbeton, welcher konstruktiv und wärmedämmend eingesetzt werden kann in Form von Hohlblocksteinen, Grossplatten und Grossblöcken. Kennwerte: Rohdichte 1,0 bis 1,4 t/m³; Druckfestigkeit 2,5 bis 8 MPa (= N/mm²) und Wärmeleitwert 0,41 bis 0,58 W/mK. Als Zuschlagstoffe für diesen Beton sind Blähton und Blähschiefer, aber auch Hüttenbims, Aschensinter und andere angegeben. Die Gefügeart ist offen.
3. Gruppe: Porenbeton (Gassilikat-, Schaumbeton), welcher konstruktiv und wärmedämmend eingesetzt werden kann in Form von Wandbauteilen, Dachplatten und Dämmbeton. Bekannt sind auch Porenbetonblocksteine. Kennwerte: Rohdichte 0,3 bis 1,0 t/m³; Druckfestigkeit 0,5 bis 15 MPa (= N/mm²) und Wärmeleitwert 0,058 bis 0,41W/mK. Als Zuschlagstoffe für diesen Beton sind Feinsand, Flugasche und Schlackensand angegeben. Die Gefügeart ist feinporig.
4. Gruppe: Dämmbeton, welcher lediglich wärmedämmend eingesetzt werden kann in Form von Dämmplatten. Kennwerte: Rohdichte 0,3 t/m³; Druckfestigkeit ungenügend für tragende Teile, und Wärmeleitwert 0,035 bis 0,35 W/mK. Als Zuschlagstoffe für diesen Beton sind Kieselgur und Perlit angegeben.

Diese vier Betongruppen zeigen deutlich, dass bei den bekannte Leichtbetonarten die Druckfestigkeit unter 16 N/mm² fällt, sobald die Wärmeleitzahl unter 0,5 W/mK oder das Raumgewicht unter 1,4 t/m³ fällt. Es ist auch entnehmbar, dass bei einem Raumgewicht von etwa einer Tonne pro Kubikmeter maximal eine Druckfestigkeit von 15 N/mm² und kein besserer Wärmeleitwert als etwa 0,4 W/mK erreicht wird. Eine Druckfestigkeit von über 8 MPa wird nur erreicht, wenn als Zuschlagstoff Blähton oder Blähschiefer verwendet wird oder wenn Porenbeton aus fein gemahlenen Zuschlagstoffen und gasbildenden Additiven hergestellt wird. Blähton und Blähschiefer nutzen jedoch begrenzte Ressourcen, und Porenbeton kann aus Gründen der Qualitätssicherung für tragenden Ortsbeton nicht verwendet werden.

Dieser Aufstellung ist daher weiter zu entnehmen, dass es keinen auf der Baustelle giessbaren Konstruktionsbeton mit einer Rohdichte von unter 1,4 t/m³ und einem Wärmeleitwert von unter 0,58 W/mK gibt. Wohl könnte Porenbeton auch auf der Baustelle gegossen werden. Seine Qualität hängt jedoch sehr stark von den äusseren Bedingungen ab. Die Erreichung einer gewünschten Porenbildung, und damit einer angestrebten Wärmedämmfähigkeit, Leichtigkeit und Tragfestigkeit, ja sogar eines angestrebten Volumens ist daher nicht gewährleistet.

Es ist daher Aufgabe der Erfindung, eine fliessfähige, aushärtende Masse vorzuschlagen, mit gegenüber dem Stand der Technik relevant besseren und vorherbestimmbaren Eigenschaften bezüglich Raumgewicht, Druckfestigkeit und/oder Wärmeleitwert zu schaffen. Insbesondere soll ein für Hoch- und Tiefbau geeigneter, auf der Baustelle als Ortsbeton in eine Schalung giessbarer Beton mit gekörnten Leichtzuschlagstoffen vorgeschlagen werden. Für die Leichtzuschlagstoffe soll rezykliertes Ausgangsmaterial verwendet werden können.

Erfindungsgemäss ist eine fliessfähige und aushärtbare Gussmasse mit einem Bindemittel und wenigstens einem Leichtzuschlagstoff dadurch gekennzeichnet, dass der Leichtzuschlagstoff aus gebrochenen Schaumglasbrocken besteht. Als Bindemittel kommt in erster Linie Zement in Frage. Dies ergibt einen Leichtbeton mit gebrochenen Schaumglasbrocken als Leichtzuschlagstoff. Der Leichtzuschlagstoff kann dabei einziger Zuschlagstoff sein oder mit herkömmlichen Zuschlagstoffen wie Sand und Kies vermengt sein. Durch die Verwendung von gebrochenen Schaumglasbrocken kann die Korngrösse beim Brechen oder beim anschliessenden Sieben des gebrochenen Korns gewählt werden. Je nach Anwendungsgebiet wird ein Monokorn oder eine Mischung verschiedener Korngrössen entsprechend einer gewünschten Siebkurve angestrebt. Die Verwendung gebrochener Schaumglasbrocken in einer aushärtbaren Gussmasse vermag nicht nur das Raumgewicht des aus der Gussmasse gegossenen Körpers zu senken. Durch die Oberflächenstruktur der gebrochenen Brocken, welche eine Vielzahl von aufgebrochenen Poren aufweist, ist beispielsweise auch der Verbund zwischen Bindemittel und Schaumglasbrocken sehr hoch. Dieser ausgezeichnete Verbund ermöglicht eine hohe Druckfestigkeit und eine gegenüber dem normalen Schwerbeton bessere Biegezugfestigkeit.

Ein solcher Leichbeton zeichnet sich durch ein dem normalen Schwerbeton ähnlichem Verhalten bezüglich Schwinden und Kriechen aus. Die Querdehnungszahl und die Dampfleitzahl ist wie bei Normalbeton einzusetzen. Jedoch ist die Wärmeleitzahl, abhängig vom Raumgewicht, deutlich tiefer als bei anderem haufwerkporigen Leichtzuschlagbeton. Der Wärmeausdehnungskoeffizient liegt um etwa 15% unter dem eines Normalbetons. Der Feuerwiderstand ist hoch, eine hohe Frost- und Frosttausalzbeständigkeit ist durch porenbildende Zusätze erreichbar.

Bei Verwendung eines Monokorns kann ein sehr leichtgewichtiger Sickerbeton oder, bei kleinerem Korn, ein Dämmputz hergestellt werden. Bei Verwendung von Zuschlagstoffen mit einer Füller- Siebkurve kann ein druckfestes, geschlossenes Gefüge erreicht werden. Dabei können Schaumglasbrocken alle Korngrössen aufweisen, oder es können eine oder mehrere Korngrössen, z.B. 0 bis 1 mm, als gewöhnlicher Sand oder als Kies zugefügt sein. Die Siebkurve kann auch gezielt von der Fullerkurve abweichen.

Wie bei normalem Schwer- oder herkömmlichem Leichtbeton kann der Gussmasse auch ein Additiv zugefügt sein. Vorteilhaft ist insbesondere ein porenbildendes Additiv, welches neben dem positiven Effekt auf die Frost- und Frosttausalzbeständigkeit von Beton auch einen gewissen Anteil an Feinteilen im Zuschlagstoff ersetzen kann. Auch kann ein Filler zur Reduktion des Zementanteils eingesetzt werden.

Dank der geschlossenporigen Struktur des Schaumglases bleiben auch bei Einwirkung von Feuchtigkeit die Schaumglasbrocken im Innern trocken und die Poren gasgefüllt. Das Schaumglas kann in einem nassen Mörtel eingebettet sein, ohne dass dadurch der Porenanteil verkleinert würde. Da Schaumglas inert ist, kann eine Reaktion beim Kontakt des Leichtzuschlagstoffes mit ändern Stoffen, z.B. Säuren und Ölen, ausgeschlossen bleiben. Der Korrosionsschutz einer Stahlbewehrung durch die Alkalität des Betons ist nicht gefährdet, da das Glas die Betonchemie diesbezüglich nicht beeinflusst.

Als Bindemittel kann auch ein organisches Harz oder ein anderer Kunststoff, Kalk, Kasein, Wasserglas etc. eingesetzt werden. Kunststoffe sind insbesondere für kleinere Fertigteile wie Wasserrinnen, Schachtböden, Wetterschenkel etc. geeignet. Kalk und Kasein sind eher im Putz- und Oberflächenbereich einsetzbar.

Vorteilhaft sind die Schaumglasbrocken kantig gebrochen. Durch kantiges Brechen der ursprünglichen Schaumglaskörper geht von ihrem Volumen kaum etwas verloren. Im Gegensatz dazu führt ein Brechen einer Rundkorns zu massiven Einbussen und einem übermässigen Anfall von Feinanteilen. Obwohl gebrochene Schaumglasbrocken sich mit Ihren Kanten und Ecken gegeneinander verkeilen und sich ineinander mit grossen Zwischenräumen verkrallen sind überraschenderweise die Verarbeitbarkeit und die Verdichtbarkeit einer Gussmasse mit kantigen Schaumglasbruchstücken als Zuschlagstoff ebenso gut wie die einer solchen mit Rundkorn.

Soll ein dichtes, druckfestes und leichtes Gefüge erreicht werden, liegen in einer Gussmasse die Schaumglasbrocken vorteilhaft in unterschiedlichen Korngrössen vor. Um ein Gefüge aus lediglich Leichtzuschlagstoffen und Bindemittel zu erreichen, weisen die Leichtzuschlagstoffe vorteilhaft eine der Fullerkurve angenäherte Siebkurve auf.

Vorteilhaft ist der Gussmasse eine Faser- oder Spanbewehrung zugesetzt, welche wie porenbildenes Additiv ebenfalls Feinanteile wie Filler oder Zuschlagstoffe der Korngrösse 0 bis 0.5 mm ersetzen kann. Diese Bewehrung erhöht zudem die Belastbarkeit der ausgehärteten Masse.

Vorteilhaft sind die Schaumglasbrocken aus Glas und/oder glasähnlichem Material und aus einem Aktivator hergestellt. Der Aktivator, welcher die Porenbildung im Glas beim Blähen im Blähofen bewirkt, ist aus Siliciumkarbid und Kohlenstoff sowie Borax oder wenigstens einem Metalloxyd zusammengesetzt. Zur Herstellung der Schaumglasbrocken wird das Mehl aus Glas oder glasähnlichem Material mit einer Menge von 1,5 bis 2,5% des mehlförmigen Aktivators vermischt und das Gemisch in einem einzigen Verfahrensschritt bei einer Temperatur zwischen 750 und 950 °C gebläht.

Das resultierende Produkt ist ein Schaumglaskörper, welcher bei geeigneten Voraussetzungen während dem Abkühlen selbsttätig in ein Monokorn zerbricht. Das Verfahren zur Herstellung eines solchen Schaumglases ist im Europäischen Patent EP 0 292 424 beschrieben, auf welches an dieser Stelle ausdrücklich Bezug genommen wird. Als Aktivator wird in diesem Verfahren eine der folgenden Mischungen vorgeschlagen:
A) 50 bis 80 Gewichtsteile Siliciumkarbid, 20 bis 50 Gewichtsteile Borax und 1 bis 10 Gewichtsteile Kohlenstoff in trockenem Zustand, oder
B) 85 bis 95 Gewichtsteile Siliciumkarbid, 1 bis 10 Gewichtsteile Manganoxyd und 1 bis 10 Gewichtsteile Kohlenstoff, oder
C) 45 bis 50 Gewichtsteile Siliciumkarbid, 1 bis 10 Gewichtsteile Kohlenstoff, 20 bis 26 Gewichtsteile Kupferoxyd und 20 bis 26 Gewichtsteile Bleioxyd in trockenem Zustand.

Es kann auch zur Sicherung einer guten Funktionsweise des Verfahrens vor dem Homogenisieren von Aktivator und Glasmehl noch Metalloxyd, z.B. Kupfer- oder Bleioxyd dem mit Aktivator B) zu versetzenden Glasmehl beigefügt werden. Die Menge von Metalloxyd wird mit 0,5 bis 1,5 Gewichtsprozent des Glasmehls angegeben. Als Kohlenstoff wird Flammruss bevorzugt. Dieser oxydiert beinahe vollkommen, was für die Festlegung der Porengrösse von Vorteil ist. Als Manganoxyd kann Braunstein verwendet werden.

Das Schaumglas aus diesem Verfahren zeichnet sich durch eine hohe Druckfestigkeit aus. Es ist geruchsneutral und inert. Seine Eigenschaften können gezielt variiert werden. Es kann durch färbende Zusätze eingefärbt werden. Die Beigabe von Blei in Form von Bleioxyd oder Bleiglas senkt z.B. die Strahlendurchlässigkeit.

Vorteilhaft weisen die Schaumglasbrocken für eine solche Gussmasse eine Druckfestigkeit von über 1 N/mm², vorzugsweise über 3 N/mm², besonders bevorzugt durchschnittlich über 5 N/mm² auf. Die Druckfestigkeit der Schaumglasbrocken, welche aus dem oben beschriebenen Verfahren resultieren, kann bis zu durchschnittlich 6 N/mm² oder mehr aufweisen. Die hohe Druckfestigkeit des Leichtzuschlagstoffes gewährleistet eine hohe Druckfestigkeit der ausgehärteten Gussmasse. Die Druckfestigkeit von bewehrten Testkörpern erreichte dank diesem Wert des darin verwendeten einzigen Zuschlagstoffes über 30 N/mm², sogar 45 N/mm² und mehr was zumindest dem Grenzbereich zwischen Beton B I und B II, und damit einem für mittel- und hochbeanspruchte Beton- und Stahlbetonbauteile geeignetem Beton entspricht.

Vorteilhaft sind die Schaumglasbrocken geschlossenzellig, damit keine Flüssigkeit in die Poren eindringen kann. Dadurch bleibt z.B. die Dämmeigenschaft des Brockens auch in nasser Umgebung unverändert. Auch das Raumgewicht einer solchen Masse kann sich, z.B. durch Wasseraufnahme, nur in Grenzen verändern. Die Poren können durch das Bindemittel nicht gefüllt werden.

Bei einer solchen Gussmasse für eine spezielle Verwendung, z.B. leichter Füllbeton für Zwischenböden, statisch belastbare Leichtbetonfertigteile, wie Treppen, Stützen, Stürze, nichttragende Elemente wie Brüstungen, Zwischenwände, wärmedämmende Elemente, Fussböden, Wandbeläge, Schallschutzelemente, ist die Rohdichte und/oder Porengrösse der Schaumglasbrocken vorteilhaft auf diese Verwendung der Gussmasse abgestimmt. Es kann davon ausgegangen werden, dass für hohe Druckfestigkeit ein hohes Raumgewicht und eine kleine Porengrösse anzustreben ist. Für Luftschall schluckende Eigenschaften ist wohl offenes, grossräumiges Porenwerk mit hohem Raumgewicht, für niedriges Raumgewicht eine grossporige, dünnwandige Ausgestaltung des Schaumglases vorteilhaft.

Für eine spezielle Verwendung der Gussmasse, z.B. Strahlenschutz in Röntgenbereichen, für Bunker oder zur Abschirmung von Produktionsbereichen mit Strahlenemmissionen, oder Dekoroberflächen bei gegossenen Fussböden, Fliesen, Leisten etc., sind die Eigenschaften der Schaumglasbrocken vorteilhaft auf diese Verwendung der Gussmasse abgestimmt. Dazu ist eine gezielte Formulierung der Zusammensetzung der Rohstoffe für die Herstellung der Schaumglasbrocken, z.B. durch Zugabe von Blei oder Farbstoffen, zweckmässig.

Bisher wurden Leichtzuschlagstoffe für Beton als Monokorn in die Betonmasse gegeben, wodurch eine spezielle Korngrösse den etwa eine Fuller-Siebkurve aufweisenden Zuschlagstoffen hinzugefügt wurde. Bei einer fliessfähigen und aushärtbaren Gussmasse, insbesondere Leichtbeton, mit einem Bindemittel, insbesondere Zement, und wenigstens einem Leichtzuschlagstoff, weisen aber mit Vorteil die Zuschlagstoffe insgesamt eine ausgewogene Siebkurve auf. Der Leichtzuschlagstoff weist dazu eine zwischen 0 und der grössten Korngrösse abgestufte Siebkurve mit wenigstens 3, vorzugsweise mehr als 5, besonders bevorzugt wenigstens 8 Korngrössen auf. Dadurch kann der Anteil an Leichtzuschlagstoff erhöht werden. Vorteilhaft macht dabei der Leichtzuschlagstoff wenigstens 80% des Zuschlagstoffes aus, bevorzugt 90%, besonders bevorzugt 100%.

Die Erfindung betrifft auch ein vorfabriziertes Element aus einem Bindemittel und wenigstens einem Zuschlagstoff, z.B. Fliese oder Verkleidungsplatte, Gehwegplatte, Dekorstab, Brüstungselement, Fertigtreppe, Wandscheibe, Bodenplatte, Tragbalken, Sturz, Gesimse etc. Ein solches Element weist erfindungsgemäss gebrochene Schaumglasbrocken als Zuschlagstoff auf. Die Vorteile davon sind oben ausgeführt. Bei der Vorfabrikation ist insbesondere das Gewicht der vorfabrizierten Teile ausschlaggebend. Durch die ausgezeichnete Druckfestigkeit und Biegezugfestigkeit des Materials bei niedrigem Raumgewicht können z.B. Geschosstreppen einstückig hergestellt und mit einem Kran versetzt werden. Wandelemente und tragende Bauteile können gegenüber normalem Schwerbeton bei gleichem Gewicht bis zum doppelten Volumen aufweisen.

Vorteilhaft kann ein solches vorfabriziertes Element eine geschnittene, gesägte, geschliffene und/oder gefräste Oberfläche aufweisen. Die durch schleifen, sägen etc. erreichte Oberfläche zeigt das Gefüge mit dem porösen Schaumglaszuschlagstoff. Diese Struktur kann z.B. dekorativ, schalltechnisch oder zwecks besserer Haftung von Putzen etc. genutzt werden. Als Beispiele seien angefügt. Fliesen, gebildet durch von einem Stab abgeschnittene Scheiben, Wandtafeln mit dekorativer und schallstreuender Wirkung, Profilstäbe zu Dekorationszwecken mit der gleichen Oberfläche wie die separat versetzten Wandelemente, leichtgewichtige und daher beim Versetzen rückenschonende Gehwegplatten mit rutschsicherer Oberfläche. Der möglichen Anwendungen sind kaum Grenzen gesetzt.

Desgleichen betrifft die Erfindung auch ein vor Ort gegossenes Bauteil von Hoch- oder Tiefbauten mit Schaumglasbrocken als Zuschlagstoff. Anwendungsgebieten davon sind z.B. tragende und nichttragende Wände, Pfeiler, Decken und Böden, Pfähle, thermisch isolierende Fundamentplatten, Strassenbeläge, Brücken, Unterlagsböden und rutschsichere Bodenbeläge. Praktisch jedes Bauteil, welches in Schwerbeton oder herkömmlichem Leichtbeton hergestellt werden kann, kann auch aus Schaumglasbeton ausgeführt werden. Dabei können die besonderen Vorteile, insbesondere Leichtgewichtigkeit und Druckfestigkeit, Geschlossenporigkeit und Wärmedämmvermögen, Beständigkeit gegen Chemikalien, Giessbarkeit, Pumpbarkeit, Abstimmbarkeit der Mischung etc. genutzt werden.

Ein solches Bauteil oder Element weist vorteilhaft ein Raumgewicht unter 1400 kg/m³, vorzugsweise unter 1200, besonders bevorzugt um oder unter 1000 kg/m³ auf. Leichte Bauteile ermöglichen oft eine Reduktion der Fundation, eine Verkleinerung der Bauteildimensionen oder eine Vergrösserung der Spannweiten. Elemente können bei kleinerem spezifischen Gewicht umso grösser sein. Insbesondere im Brücken- oder Hochhausbau, oder für Bauten über schlecht tragendem Gelände ist die Reduktion des Eigengewichts der Baute von grossem Vorteil. Ummantelungen von Leitungen können mit solchem Leichtbaustoff im Wasser schwimmend ausgeführt werden.

Vorteilhaft weist ein solches Bauteil oder Element eine Druckfestigkeit von wenigstens 12, vorzugsweise 18, besonders bevorzugt über 25 N/mm² auf. Mit den Festigkeitsklassen Bn 150 und Bn 250 kann der Leichtbeton oder ein vergleichbarer Leichtbaustoff für statisch belastete Bauteile verwendet werden.

Weist das Bauteil oder Element eine Wärmeleitfähigkeit von maximal 0,4, vorzugsweise unter 0,35, besonders bevorzugt unter 0,32 W/mK, so ist es zudem wärmedämmend und dadurch die Feuersicherheit eines Gebäudes erhöhend einsetzbar.

Vorteilhaft zeichnet sich ein Bauteil oder Element durch ein Verhältnis von Druckfestigkeit in N/mm2 und Raumgewicht (trocken) in kg/m³ von über 1:80, vorzugsweise über 1:60, besonders bevorzugt über 1:50 aus. Je höher der Wert dieses Verhältnisses ist, desto günstiger ist er, da mit einem leichteren Bauteil die gleichen oder grössere Lasten abgetragen werden können.

Die Erfindung betrifft auch ein Verfahren zur Herstellung von strukturierten Oberflächen in gegossenen Bauteilen. Bei diesem Verfahren wird eine Gussmasse mit einem Bindemittel und Schaumglasbrocken als Zuschlagstoff in eine Schalung oder Form gegossen und die Oberfläche nach dem Aushärten der Gussmasse abgetragen. Zum Abtragen der Oberfläche kann die durch das Bindemittel gebildete äussere Haut abgeschliffen, abgefräst, abgekratzt, abgespitzt, gestockt etc. werden. Die neue Oberfläche ist danach geprägt durch die Gefügestruktur mit dem porenreichen Zuschlagstoff. Dies ergibt eine dekorative, rutschfeste, schalltechnisch interessante Oberfläche.

Diese Oberfläche kann danach versiegelt werden, um die aufgebrochenen Poren zu verschliessen. Das Bindemittel und/oder die Schaumglasbrocken können vor dem Giessen eingefärbt werden. Dadurch kann die Farbwirkung des Bauteils gestaltet werden.

Nachfolgend wird anhand von Beispielen die Erfindung näher erläutert: Das gebackene Schaumglas verlässt den Blähofen in einer durch die eingangsseitige Schichtstärke des Glasstaubes gegebenen Plattenstärke. Diese Schaumglasplatte zerbricht aufgrund der in der Platte entstehenden Temperaturunterschiede je nach Dicke der Platte und je nach ihrer Oberflächenstruktur in Brocken einheitlicher Grösse. Die kleinsten Standardmasse der Brocken sind etwa 10/15 mm. Für kleinere Korngrössen muss dieses Korn gebrochen werden. Bei einer ersten Versuchsreihe mit Schaumglasbeton wurde durch einfaches Brechen des aus dem Blähofen kommenden Monokorns eine Siebkurve der Schaumglasbrocken erreicht, welche der für Beton bewährten Fullerkurve grob angenähert war.

Die 0 bis 16 mm Siebkurve des in dieser Versuchsreihe verwendeten Schaumglases hatte einen Anteil von 28% zwischen 0 und 1 mm (Betonkies ca. 12%), 18,3% zwischen 1 und 4 mm (Betonkies ca. 24%) und 53.7% zwischen 4 und 16 mm (Betonkies ca. 64%). Dabei ist gegenüber den Idealanteilen der angestrebten Fullerkurve der Anteil zwischen 0 und 0,25 mm deutlich unterdurchschnittlich und der Anteil zwischen 0,25 und 1 mm deutlich überdurchschnittlich vertreten. Daher musste mit einem überdurchschnittlichen Anteil an Zement gerechnet werden. Es wurde zudem ein porenbildendes Additiv zugesetzt. Nachfolgend seien vier Betonmischungen als Beispiele aus dieser ersten Versuchsreihe herausgegriffen.

Ein erster Beton wurde aus einem 650 kg/m³ Zement, ohne Filler, mit 258 kg/m³ Wasser, 120 kg/m³ Schaumglas 0-1 mm, 79 kg/m³ Schaumglas 1-4 mm, 231 kg/m³ Schaumglas 4 bis 16 mm und 3.9 kg/m³ Betonzusatz zur Porenbildung im Mörtel hergestellt. Daraus ergab sich ein Beton, welcher nach 28 Tagen ein Raumgewicht von 1350 kg/m³ aufwies. Dieses reduzierte sich nach dem Trocknen auf 1220 kg/m³. Die Druckfestigkeit wies 25 N/mm², die Biegezugfestigkeit 3 N/mm² auf. Die Wärmeleitfähigkeit des getrockneten Betons wurde auf 0.38 W/mK geschätzt, das E-Modul auf 8500 N/mm².

Ein zweiter Beton mit 550 kg/m³ Zement, 153 l/m³ Wasser, 3.3 kg/m³ des Betonzusatzes und 460 kg/m³ des Schaumglases mit gleicher Siebkurve ergab einen Beton mit 1265 kg/m³ nach 28 Tagen. Getrocknet wog er noch 1100 kg/m³ auf. Die Druckfestigkeit lag nach 28 Tagen bei 22 N/mm², die Biegezugfestigkeit bei 2,8 N/mm². Die Wärmeleitfähigkeit wurde auf 0.34 W/mK, das E-Modul auf 7000 N/mm² geschätzt.

Ein Beton aus 450 kg/m³ Zement, 233 l/m³ Wasser, 2.7 kg/m³ porenbildendem Betonzusatz und 505 kg/m³ des Schaumglases wies nach 28 Tagen ein nasses Raumgewicht von 1190, trocken 1040 auf. Die Druckfestigkeit zu diesem Zeitpunkt lag bei 19 N/mm², die Biegezugfestigkeit bei 2.5 N/mm². Die Schätzungen von Wärmeleitfähigkeit und E-Modul ergaben 0.31 W/mK und 6000 N/mm².

Ein Beton, welcher getrocknet noch 970 kg/m³ wog, wurde aus 350 kg/m³ Zement, 217 l/m³ Wasser, 2,1 kg/m³ Betonzusatz und 535 kg/m³ Schaumglas 0-16 mm der gleichen Siebkurve hergestellt. Die Druckfestigkeit und Biegezugfestigkeit lagen nach 28 Tagen bei 12 bzw. 2.2 N/mm². Die Wärmedämmfähigkeit erreichte schätzungsweise 0.28 W/mK und das E-Modul 4'500 N/mm².

Mit diesen Werten wurde trotz deutlichen Abweichungen von der idealen Siebkurve der Zuschlagstoffe bereits ein Beton erreicht, welcher nicht mehr in die gängigen Klassierungen passt. Der Schaumglasbeton war überraschenderweise wie gewöhnlicher Schwerbeton giessbar und pumpbar. Die Entmischung des Betons war auch beim Vibrieren unbedeutend. Es wurde damit ein Beton von unter 1,4 t/m³ erreicht, welcher auf der Baustelle wie gewöhnlicher Schwerbeton verarbeitbar ist, eine wenigsten drei- bis fünffache Druckfestigkeit eines vom Raumgewicht her vergleichbaren herkömmlichen Leichtzuschlagbetons und gleichzeitig eine um 25 bis 35% bessere Wärmedämmfähigkeit aufweist.

Mit einem Trommelbrecher konnte die Kornverteilung des Schaumglases verbessert werden. Eine optimierte Korngrössenverteilung im SchaumglasZuschlagstoff wurde durch Brechen im Trommelbrecher, anschliessendes Aussieben und Zusammenstellen der gewünschten Siebkurve aus den verschiedenen ausgesiebten Korngrössen. Durch eine Verbesserung der Siebkurve der Zuschlagstoffe und die Zugabe von Stahlfaserarmierung konnten in einer Weiterentwicklung der Erfindung bei einem Raumgewicht von etwas über 1300 kg/m³ Druckfestigkeiten bis über 30 N/mm² erreicht werden. Dies ergibt ein Leistungsverhältnis zwischen Druckfestigkeit und Raumgewicht in den angegebenen Einheiten von über 1:45. Dies entspricht der Leistung eines Schwerbetons von 2,5t/m³ Raumgewicht und 55 N/mm² Druckfestigkeit. Bei gutem Kornaufbau liegen die Druckfestigkeiten eines erfindungsgemässen Leichtbetons mit 900 bis 1000 kg/m³ immer noch zwischen 13 und 17 N/mm². Mit einem Raumgewicht von 1000 bis 1100 kg/m³ können Druckfestigkeiten zwischen 17 und 21 N/mm², bei 1100 bis 1200 kg/m³ zwischen 21 und 26 N/mm² erreicht werden. Eine Verbesserung dieser Werte im Laufe der weiteren Verfeinerung der Rezepturen ist zu erwarten. Bei einer Druckfestigkeit von 45 N/mm², wie an einem bewehrten Bauteil gemessen wurde, liegt obiges Verhältnis über 1/30.

Zusammenfassend kann gesagt werden, dass durch die Verwendung von gebrochenem Schaumglas als Zuschlagstoff für eine mit einem Bindemittel gebundene Gussmasse ein Baustoff erreicht wurde, welcher eine sehr breit gefächerte Anwendung ermöglicht. Dabei werden insbesondere geschätzt:
Seine bauphysikalischen Eigenschaften wie
- hohe Druckfestigkeit bei niedrigem Raumgewicht und tiefem Wärmeleitwert,
- hohe Feuerwiderstandsfähigkeit dank tiefer Wärmeleitzahl und niedrigem Elastizitätsmodul
- geringe Wasseraufnahmefähigkeit dank geschlossenporigem, nicht saugfähigem Zuschlagstoff,
- hoher Korrosionsschutz für die Stahlbewehrung dank hohem Gehalt an Zementstein, aber auch seine Verarbeitbarkeit, insbesondere
- seine Mischbarkeit und Transportierbarkeit;
- seine Giessbarkeit und Pumpbarkeit,
- sein Verdichtbarkeit und Vibrierbarkeit.

Weiter wird die optische, akustische und/oder taktile Wirkung des gebrochenen, gesägten oder angeschliffenen Bauteiles geschätzt an
- gegossenen oder verlegten Bodenbelägen,
- gegossenen oder versetzten, sichtbare Oberflächen bildenden Bauteilen, z.B. an Wänden und Decken,
- Akustikelementen und Schallschutzelementen,
- Dekorelementen.

Seine Umweltverträglichkeit und seine ökologische Wertschöpfung aus Abfallprodukten sind weitere, nicht zu unterschätzende Qualitäten.

## Patentansprüche

1. Fliessfähige und aushärtbare Gussmasse, insbesondere Leichtbeton, mit einem Bindemittel, insbesondere Zement, und wenigstens einem Leichtzuschlagstoff, dadurch gekennzeichnet, dass der Leichtzuschlagstoff aus gebrochenen Schaumglasbrocken besteht.

2. Gussmasse nach Anspruch 1, dadurch gekennzeichnet, dass die Schaumglasbrocken kantig gebrochen sind.

3. Gussmasse nach Anspruch 1 oder 2, dadurch gekennzeichnet, dass die Schaumglasbrocken in unterschiedlichen Korngrössen vorliegen.

4. Gussmasse nach Anspruch 3, dadurch gekennzeichnet, dass die Zuschlagstoffe, insbesondere die Leichtzuschlagstoffe, eine der Fullerkurve angenäherte Siebkurve aufweisen.

5. Gussmasse nach einem der Ansprüche 1 bis 4, gekennzeichnet durch eine Faser- oder Spanbewehrung.

6. Gussmasse nach einem der Ansprüche 1 bis 5, dadurch gekennzeichnet, dass die Schaumglasbrocken aus Glas und/oder glasähnlichem Material und aus einem Aktivator hergestellt sind, welcher Aktivator aus Siliciumkarbid und Kohlenstoff sowie Borax oder wenigstens einem Metalloxyd zusammengesetzt ist, wobei zur Herstellung der Schaumglasbrocken Mehl aus dem Glas oder glasähnlichem Material mit dem mehlförmigen Aktivator vermischt und das Gemisch in einem einzigen Verfahrensschritt bei einer Temperatur zwischen 750 und 950 °C gebläht wurde.

7. Gussmasse nach einem der Ansprüche 1 bis 6, dadurch gekennzeichnet, dass die Schaumglasbrocken durchschnittlich eine Druckfestigkeit von über 1 N/mm², vorzugsweise über 3 N/mm², besonders bevorzugt durchschnittlich über 5 N/mm² aufweisen.

8. Gussmasse nach einem der Ansprüche 1 bis 7, dadurch gekennzeichnet, dass die Schaumglasbrocken geschlossenzellig sind.

9. Gussmasse nach einem der Ansprüche 1 bis 8 für eine spezielle Verwendung, z.B. leichter Füllbeton, statisch belastbare Leichtbetonfertigteile, nichttragende Elemente, Fussböden, Schallschutzelemente, dadurch gekennzeichnet, dass die Rohdichte und/oder Porengrösse der Schaumglasbrocken auf diese Verwendung der Gussmasse abgestimmt ist.

10. Gussmasse nach einem der Ansprüche 1 bis 9 für eine spezielle Verwendung, z.B. Strahlenschutz, Dekoroberfläche, gekennzeichnet durch eine gezielte Formulierung der Zusammensetzung der Rohstoffe für die Herstellung der Schaumglasbrocken, z.B. durch Zugabe von Blei oder Farbstoffen, so dass die Eigenschaften der Schaumglasbrocken auf diese Verwendung der Gussmasse abgestimmt sind.

11. Fliessfähige und aushärtbare Gussmasse, insbesondere Leichtbeton, mit einem Bindemittel, insbesondere Zement, und wenigstens einem Leichtzuschlagstoff, dadurch gekennzeichnet, dass der Leichtzuschlagstoff eine zwischen 0 und der grössten Korngrösse abgestufte Siebkurve mit wenigstens 3, vorzugsweise mehr als 5, besonders bevorzugt wenigstens 8 Korngrössen aufweist.

12. Gussmasse nach Anspruch 11, gekennzeichnet durch wenigstens ein kennzeichnendes Merkmal der Ansprüche 1 bis 10.

13. Vorfabriziertes Element, z.B. Fliese oder Verkleidungsplatte, Gehwegplatte, Dekorstab, Brüstungselement, Fertigtreppe, Wandscheibe, Bodenplatte, Tragbalken, Sturz, Gesimse etc., oder vor Ort gegossenes Bauteil von Hoch- oder Tiefbauten, z.B. , aus einem Bindemittel und wenigstens einem Zuschlagstoff, aus einer Gussmasse gemäss einem der Ansprüche 1 bis 12.

14. Bauteil oder Element gemäss Anspruch 13, gekennzeichnet durch eine geschnittene, gesägte, geschliffene und/oder gefräste Oberfläche.

15. Bauteil oder Element nach Anspruch 13 oder 14, dadurch gekennzeichnet, dass das Raumgewicht unter 1400 kg/m³, vorzugsweise unter 1200, besonders bevorzugt um oder unter 1000 kg/m³ liegt.

16. Bauteil oder Element nach einem der Ansprüche 11 bis 15, gekennzeichnet durch eine Druckfestigkeit von wenigstens 12, vorzugsweise 18, besonders bevorzugt über 25 N/mm².

17. Bauteil oder Element nach einem der Ansprüche 11 bis 16, gekennzeichnet durch eine Wärmeleitfähigkeit von maximal 0,4, vorzugsweise unter 0,35, besonders bevorzugt unter 0,32 W/mK.

18. Bauteil oder Element nach einem der Ansprüche 11 bis 17, gekennzeichnet durch ein Verhältnis von Druckfestigkeit in N/mm² und Raumgewicht (trocken) in kg/m³ von über 1:80, vorzugsweise über 1:60, besonders bevorzugt über 1:50.

19. Verfahren zur Herstellung von strukturierten Oberflächen in gegossenen Bauteilen, dadurch gekennzeichnet, dass eine Gussmasse mit einem Bindemittel und gebrochenen Schaumglasbrocken als Zuschlagstoff in eine Schalung oder Form gegossen und die Oberfläche nach dem Aushärten der Gussmasse abgetragen, z.B. angeschliffen oder gestockt wird.

20. Verfahren nach Anspruch 19, dadurch gekennzeichnet, dass die Oberfläche versiegelt wird.

21. Verfahren nach Anspruch 19 oder 20, dadurch gekennzeichnet, dass das Bindemittel und/oder die Schaumglasbrocken vor dem Giessen eingefärbt werden.
